(19) **Europäisches Patentamt European Patent Office Office européen des brevets**

(11) **EP 4 760 216 A1**

(12) **EUROPEAN PATENT APPLICATION**
published in accordance with Art. 153(4) EPC

(43) Date of publication:
17.06.2026 Bulletin 2026/25

(21) Application number: 24851941.5

(22) Date of filing: 09.08.2024

(51) International Patent Classification (IPC):
$G01F\ 3/22^{(2006.01)}$     $G01F\ 1/66^{(2022.01)}$

(52) Cooperative Patent Classification (CPC):
G01F 1/66; G01F 3/22

(86) International application number:
PCT/JP2024/028611

(87) International publication number:
WO 2025/033524 (13.02.2025 Gazette 2025/07)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 10.08.2023 JP 2023130983

(71) Applicant: Panasonic Intellectual Property
Management Co., Ltd.
Kadoma-shi, Osaka 571-0057 (JP)

(72) Inventors:
• MATSUDA, Masataka
  Osaka 571-0057 (JP)
• SHIRASAWA, Tadanori
  Osaka 571-0057 (JP)
• NAKABAYASHI, Yuuji
  Osaka 571-0057 (JP)

(74) Representative: SSM Sandmair
Patentanwälte Rechtsanwalt
Partnerschaft mbB
Joseph-Wild-Straße 20
81829 München (DE)

(54) **GAS METER**

(57) A gas meter is a gas meter connected downstream of a gas container and includes: a measurement passage through which gas flows; a flow rate measuring means for measuring a flow rate of the gas; a composition detecting means for detecting composition of the gas; a temperature detecting means for detecting a temperature of the gas; and a remaining gas amount calculating means for calculating a remaining gas amount in the gas container based on the composition measured by the composition detecting means and the temperature detected by the temperature detecting means at a predetermined time point, the composition measured by the composition detecting means and the temperature detected by the temperature detecting means after a predetermined time period has elapsed since the predetermined time point, and the flow rate measured by the flow rate measuring means in a period from the predetermined time point until the predetermined time period elapses.

FIG. 3A

FIG. 3B

FIG. 3C

## Description

### Technical Field

The present disclosure relates to a gas meter that measures the flow rate of gas by utilizing ultrasound, particularly to a gas meter having a function of measuring a remaining gas amount in a gas container.

### Background Art

PTL 1 discloses a gas measuring device that resets an integrated value of a remaining gas amount monitoring function. This gas measuring device includes: a pressure regulator with an automatic switching function which includes a switching signal generating means for generating a switching signal in accordance with a switching operation at the time of the replacement of a gas container; a measurer that measures a gas use amount of a gas combustor that consumes the gas supplied from the pressure regulator; and a component that resets the integrated value of the remaining gas amount monitoring function based on the signal from the pressure regulator.

### Citation List

### Patent Literature

PTL 1: Japanese Laid-Open Patent Application Publication No. 2001-174308

### Summary of Invention

### Technical Problem

Conventionally, the remaining gas amount in the gas container is detected by remeasuring the gas use amount that has been reset upon reception of the gas container switching signal from, for example, the pressure regulator with the automatic switching function. Due to this method, the reset operation is not appropriately performed at the time of the replacement of the gas container in some cases, and for example, when the gas container is replaced with a gas container that is not unused, the remaining gas amount cannot be accurately detected.

An object of the present disclosure is to provide a gas meter that can obtain an accurate remaining gas amount in a gas container even when an incorrect operation is performed at the time of the replacement of the gas container, by obtaining the remaining gas amount in the gas container based on the flow rate of gas during the use of the gas and the composition and temperature of the gas before and after the use of the gas.

### Solution to Problem

A gas meter of the present disclosure is a gas meter connected downstream of a gas container and includes: a measurement passage through which gas flows; a flow rate measuring means for measuring a flow rate of the gas; a composition detecting means for detecting composition of the gas; a temperature detecting means for measuring a temperature of the gas; and a remaining gas amount calculating means for measuring a remaining gas amount in the gas container based on the composition measured by the composition detecting means and the temperature measured by the temperature detecting means at a predetermined time point, the composition measured by the composition detecting means and the temperature measured by the temperature detecting means after a predetermined time period has elapsed since the predetermined time point, and the flow rate measured by the flow rate measuring means in a period from the predetermined time point until the predetermined time period elapses.

### Advantageous Effects of Invention

The present disclosure can provide a gas meter that can measure an accurate remaining gas amount in a gas container even when an incorrect operation is performed at the time of the replacement of the gas container, by measuring the remaining gas amount in the gas container based on the flow rate of gas during the use of the gas and the composition and temperature of the gas before and after the use of the gas.

### Brief Description of Drawings

FIG. 1A is a system diagram including a gas meter according to one embodiment.

FIG. 1B is another system diagram including the gas meter according to one embodiment.

FIG. 2 is a block diagram of the gas meter according to one embodiment.

FIG. 3A is a graph showing a change in a propagation time in accordance with a change in a remaining gas amount.

FIG. 3B is a graph showing changes in a flow rate and an integrated flow amount in accordance with the change in the remaining gas amount. FIG. 3C is a diagram showing measurement timings according to one embodiment.

FIG. 4 is a flowchart for explaining steps performed by the gas meter according to one embodiment.

FIG. 5 is a block diagram of the gas meter according to one embodiment.

FIG. 6A is a graph showing a change in a downstream after-heating temperature in accordance with the change in the remaining gas amount. FIG. 6B is a graph showing changes in the flow rate and the integrated flow amount in accordance with the change in the remaining gas amount.

FIG. 7 is a flowchart for explaining steps performed by the gas meter according to one embodiment.

## Description of Embodiments

### Findings on Which the Present Disclosure is Based

When gas is supplied from a gas container, such as a so-called LP gas cylinder, the amount of gas usable is limited, and therefore, it is essential to periodically replace the gas container to prevent gas run-out. Thus, it is desirable that a gas supplier efficiently replace the gas container.

Gas meters having a function of monitoring a remaining gas amount in the gas container (hereinafter referred to as an "integrated remaining gas amount monitoring function") to efficiently replace the gas container have been known. Such gas meter estimates the remaining gas amount in the gas container by integrating the amount of gas used after the replacement of the gas container. When the remaining gas amount becomes small, the gas meter communicates with a gas container management company (hereinafter referred to as a "gas supplier"), and the gas supplier replaces the gas container before the gas run-out. Moreover, the gas meter with the integrated remaining gas amount monitoring function includes a manual switch that resets an integrated value for the integrated remaining gas amount monitoring function. At the time of the replacement of the gas container, an operator needs to operate the switch to reset the integrated value for the remaining gas amount monitoring.

Moreover, replacing the gas container after the remaining gas amount in the gas container becomes zero is efficient from the viewpoint of delivery. Therefore, the following measure has been taken, i.e., two gas containers are installed, and a switching valve is provided, so that when the remaining gas amount in one of the gas containers becomes almost zero, the switching valve automatically switches to the other gas container that is full, and this can secure a certain amount of time before the replacement. However, even in this case, in order that the gas supplier manages the replacement timing of the gas container, the gas meter with the integrated remaining gas amount monitoring function needs to be used. Moreover, at the time of the replacement of the gas container, the operator needs to operate the switch to reset the integrated value for the remaining gas amount monitoring.

As described above, in order to effectively utilize the integrated remaining gas amount monitoring function, the operator needs to manually reset the use amount of gas at the time of the replacement of the gas container. As a result, there are cases where the reset operation is forgotten at the time of the replacement of the gas container and where the reset operation is performed even though the gas container is not replaced.

Therefore, proposed is a method of: using a pressure regulator with a switching function which has a function of transmitting a signal at the time of the switching of the gas container by the switching valve; and resetting the integrated value for the integrated remaining gas amount monitoring function based on the signal transmitted from the pressure regulator. However, according to this method, it is necessary to add a signal generation function at the time of the switching and a communication function to the pressure regulator, and it is also necessary for the pressure regulator to communicate with the gas meter. This leads to a cost increase of the pressure regulator. Moreover, the present inventors have found a problem that when the gas container that is not unused is mistakenly attached, the remaining gas amount cannot be managed appropriately. To solve this problem, the present inventors have arrived at the subject matter of the present disclosure.

Hereinafter, embodiments of the present disclosure will be described in detail with reference to the drawings. However, excessively detailed descriptions may be omitted. For example, detailed explanations of matters that are already well known, and repeated explanations of configurations that are substantially the same, may be omitted. It should be noted that the accompanying drawings and the following description are provided to enable those skilled in the art to fully understand the present disclosure, and are not intended to limit the subject matter recited in the claims.

**Embodiment 1**

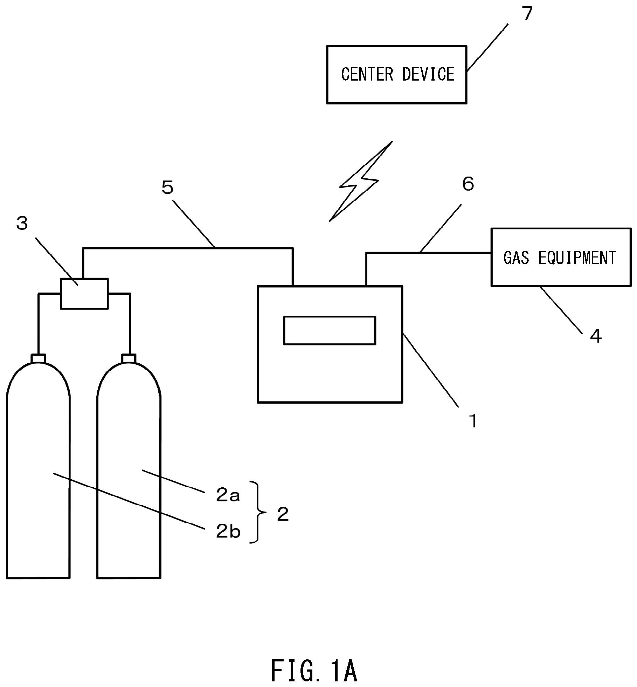

Hereinafter, Embodiment 1 will be described with reference to FIGS. 1A to 4.

**1-1. Configurations**

FIG. 1A is a diagram showing an installation state of a gas meter 1 according to Embodiment 1. As shown in FIG. 1A, a gas management system includes: two gas containers 2; a switching valve 3 that switches a supply source between the two gas containers 2; the gas meter 1; and gas equipment 4. The gas from one of the two gas containers 2 is supplied through an upstream pipe 5, the gas meter 1, and a downstream pipe 6 to the gas equipment 4. Examples of the switching valve 3 include a switching valve that detects pressure and automatically switch the supply source and a switching valve that switches the supply source by a manual operation of the operator.

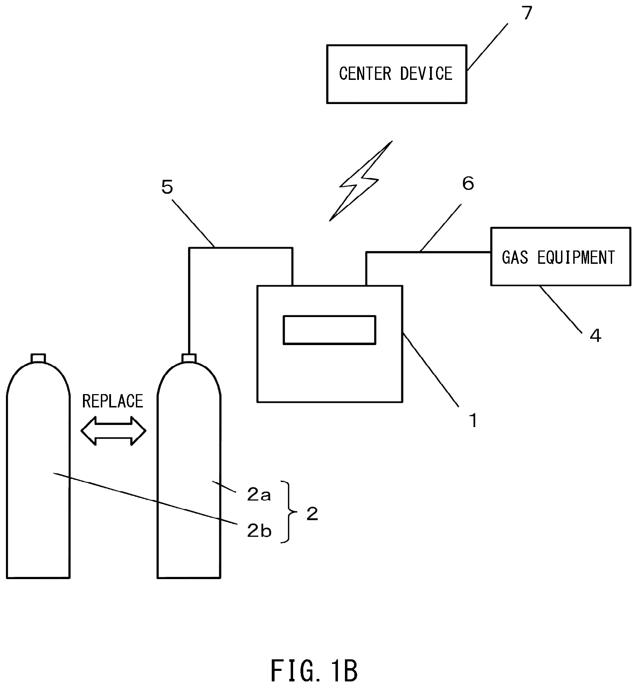

FIG. 1B is a diagram showing another installation state of the gas meter according to Embodiment 1. The configuration shown in FIG. 1B is different from the configuration shown in FIG. 1A in that the switching valve 3 does not switch the supply source between the two gas containers 2, but the operator replaces the gas container 2 with a new one. The following will be described on the basis that between the two gas containers 2, the gas container 2 in which part of the gas has already been consumed is referred to as an "in-use container 2a," and the gas container 2 that is full of gas is referred to as an "unused container 2b." Moreover, since the function of the gas meter 1 shown in FIG. 1A and the function of the gas meter 1 shown in FIG. 1B are the same, the following explanation of the gas meter 1 is common to both.

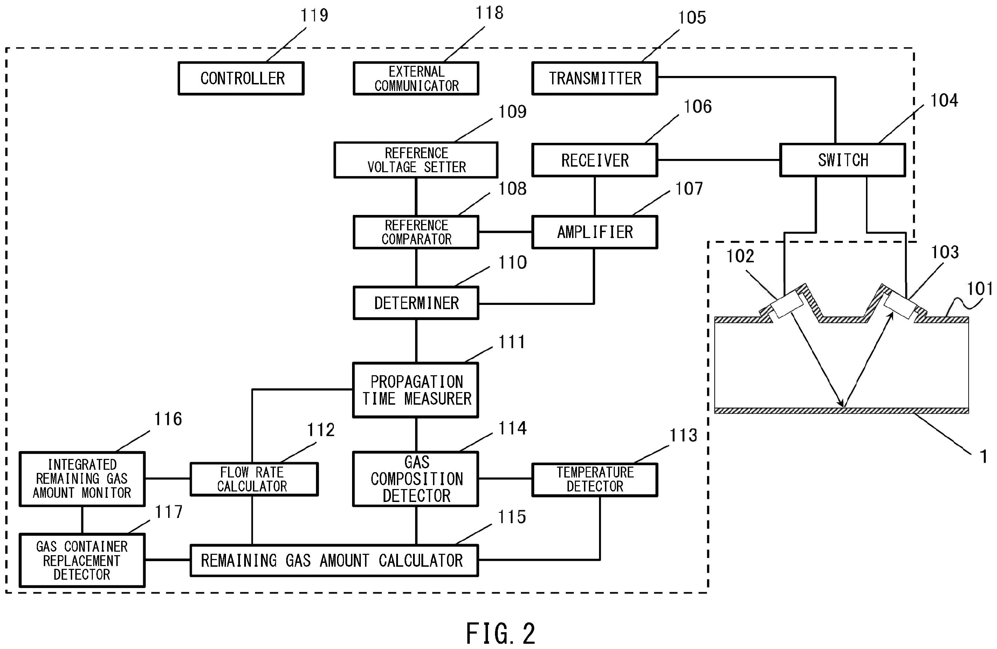

FIG. 2 is a block diagram showing the configuration of the gas meter 1 according to the present embodiment. As shown in FIG. 2, the gas meter 1 includes: a measurement passage 101 through which a fluid to be measured flows; a first ultrasonic sensor 102 located on an upstream side in the measurement passage 101; a second ultrasonic sensor 103 located on a downstream side in the measurement passage 101; and a switch 104 that switches transmission and reception of the first ultrasonic sensor 102 and the second ultrasonic sensor 103. Moreover, the gas meter 1 further includes: a transmitter 105 that drives the first ultrasonic sensor 102 and the second ultrasonic sensor 103; a receiver 106 that receives a received signal that has been received by a reception-side ultrasonic sensor and has passed through the switch 104; an amplifier 107 that amplifies the received signal to a predetermined amplitude; and a reference comparator 108 that compares the voltage of the received signal, amplified by the amplifier 107, with a reference voltage.

Moreover, the gas meter 1 includes: a reference voltage setter 109 that sets the reference voltage to be compared by the reference comparator 108; a determiner 110 that determines a reference point for time measurement based on the result of the comparison by the reference comparator 108; and a propagation time measurer 111 that measures a propagation time of ultrasound based on the result of the determiner 110. Furthermore, the gas meter 1 includes: a flow rate calculator 112 that calculates the flow rate of the fluid to be measured, based on the propagation time measured by the propagation time measurer 111; a temperature detector 113 that detects the temperature of the gas; and a gas composition detector 114 that obtains the composition of the gas based on the propagation time measured by the propagation time measurer 111 and the temperature detected by the temperature detector 113. Moreover, the gas meter 1 includes: a remaining gas amount calculator 115 that calculates the remaining gas amount in the gas container 2 based on the composition of the gas obtained by the gas composition detector 114, the temperature detected by the temperature detector 113, and the flow rate measured by the flow rate calculator 112; and an integrated remaining gas amount monitor 116 that monitors the remaining gas amount in the gas container 2 by integrating the flow rate obtained by the flow rate calculator 112. Furthermore, the gas meter 1 includes: a gas container replacement detector 117 that detects the replacement timing of the gas container 2 based on the remaining gas amount calculated by the remaining gas amount calculator 115; an external communicator 118 that communicates with an external device, such as a center device 7 operated by the gas supplier or the like; and a controller 119 that performs entire control and is constituted by, for example, a microcomputer.

**1-2. Operations**

Next, the operations of the remaining gas amount calculator 115 in the present embodiment will be described.

**1-2-1. Operations When Remaining Gas Amount is Measured**

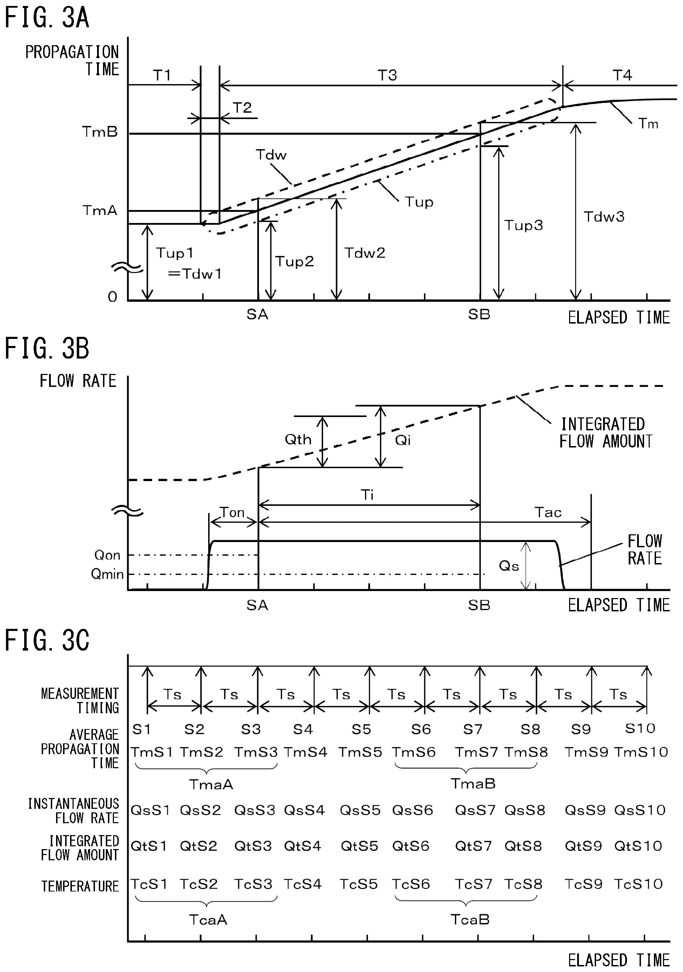

FIG. 3A is a diagram showing changes in the propagation time of the ultrasound before, while, and after the gas in the gas container 2 is consumed at a certain flow rate by the gas equipment 4 or the like. FIG. 3B is a diagram showing changes in the flow rate and the integrated flow amount. FIG. 3C is a diagram showing one example of the measurement timings of the propagation time by the propagation time measurer 111.

In FIG. 3A, "Tup" shown by a one-dot chain line represents a change in the propagation time from the first ultrasonic sensor 102 to the second ultrasonic sensor 103 (hereinafter referred to as an "upstream propagation time Tup"), and "Tdw" shown by a dotted line represents a change in the propagation time from the second ultrasonic sensor 103 to the first ultrasonic sensor 102 (hereinafter referred to as a "downstream propagation time Tdw"). Moreover, "Tm" shown by a solid line represents an average value of the upstream propagation time Tup and the downstream propagation time Tdw (hereinafter referred to as an "average propagation time Tm").

Moreover, in FIG. 3A, a period T1 is a period in which the gas is not flowing and is not consumed, and a period T2 is a period in which the gas starts flowing, and the gas remaining in the upstream pipe 5 is passing through the gas meter 1. Furthermore, a period T3 is a period in which the gas is flowing and is being consumed, and a period T4 is a period in which the consumption of the gas is completed.

Moreover, in FIG. 3A, regarding a relationship between an upstream propagation time Tup2 and a downstream propagation time Tdw2 at a timing SA during the gas consumption and a relationship between an upstream propagation time Tup3 and a downstream propagation time Tdw3 at a timing SB during the gas consumption with respect to a relationship between an upstream propagation time Tup1 and a downstream propagation time Tdw1 before the start of the gas consumption, the upstream propagation time is shorter than the downstream propagation time at each timing. This is due to the dependence on the flow velocity of the gas. Therefore, the flow rate calculator 112 can obtain a flow rate Qs by obtaining the flow velocity of the gas from a propagation time difference between the upstream propagation time Tup and the downstream propagation time Tdw and multiplying the obtained flow velocity by a passage sectional area and a flow rate coefficient.

Here, as is clear from FIG. 3A, during the gas consumption, the propagation time of the ultrasound increases over time. This is due to a change in the speed of sound based on the composition of the gas filled in the gas container 2. The LP gas filled at high pressure in the gas container 2 is a gas mixture containing components having different vapor pressures, such as propane, butane, and propylene. In the gas container 2, the gas exists in both a liquid phase and a gas phase, which are in equilibrium. Therefore, the gas is discharged from the gas container 2 in the order of components having higher vapor pressures, namely propylene, propane, and butane. Thus, when the remaining gas amount in the gas container 2 decreases, the composition of the gas changes, and the proportion of butane increases. Since the proportion of butane, whose speed of sound is slower than those of propylene and propane, increases, the propagation time increases. The correlation of these is based on a known equation, and the composition of the gas can be obtained from the propagation time and the temperature.

The remaining gas amount calculator 115 monitors the average propagation time Tm, a temperature Tc, and the flow rate Qs. When an integrated flow amount (hereinafter referred to as a "gas consumption amount") Qi in a predetermined time period Tac changes to a predetermined integrated flow amount Qth or more, the remaining gas amount calculator 115 performs calculation of measuring a remaining gas amount N in the gas container 2.

Specifically, as shown in FIG. 3C, the propagation time measurer 111 measures (S1 to S10) the propagation times (the upstream propagation time Tup and the downstream propagation time Tw) at intervals of a predetermined sampling period Ts (two seconds, for example), and measures the average propagation times (TmS1 to TmS10) based on these propagation times. The flow rate calculator 112 calculates instantaneous flow rates (QsS1 to QsS10) and integrated flow amounts (QtS1 to QtS10) based on the propagation times, and the temperature detector 113 obtains temperatures (TcS1 to TcS10).

Then, when the gas consumption amount has exceeded the predetermined integrated flow amount Qth within the predetermined time period Tac starting from the timing SA, the remaining gas amount calculator 115 calculates the remaining gas amount N in the gas container 2 based on a before-consumption average propagation time TmA (=TmS3) and a before-consumption temperature TcA (=TcS3) at the timing SA, an after-consumption average propagation time TmB (=TmS7) and an after-consumption temperature TcB (=TcS7) at the timing SB after the predetermined integrated flow amount Qth or more of gas is consumed, and the gas consumption amount Qi consumed in a period Ti between the timing SA and the timing SB.

A moving average of the average propagation times Tm obtained from a plurality of measurements and a moving average of the temperatures obtained from a plurality of measurements may be used to measure the remaining gas amount. For example, when the gas consumption amount Qi has exceeded the predetermined integrated flow amount Qth with respect to a moving average TmaA of three average propagation times (TmS1, TmS2, and TmS3) obtained by the measurements S1 to S3 shown in FIG. 3C, a moving average TcaA of three temperatures (TcS1, TcS2, and TcS3) obtained by the measurements S1 to S3, a moving average TmaB of three average propagation times (TmS6, TmS7, and TmS8) obtained by the measurements S6 to S8 separated by the period Ti, and a moving average TcaB of three temperatures (Tc6, Tc7, and Tc8) obtained by the measurements S6 to S8, the remaining gas amount N may be measured based on TmaA, TcaA, TmaB, TcaB, and the gas consumption amount (Qi=QtS7-QtS2=QsS3+QsS4+QsS5+QsS6+QsS7). In this case, even when measurement errors occur in the propagation time or the temperature due to noise or the like, the remaining gas amount N can be accurately measured.

Moreover, the propagation times are not limited to the average propagation times Tm and may be the upstream propagation times Tup or the downstream propagation times Tdw measured in the respective measurements. The predetermined time period Tac and the predetermined integrated flow amount Qth can be suitably set based on the composition of the LP gas filled in the gas container 2.

**1-2-2. Explanation of a Series of Operations Using a Flowchart**

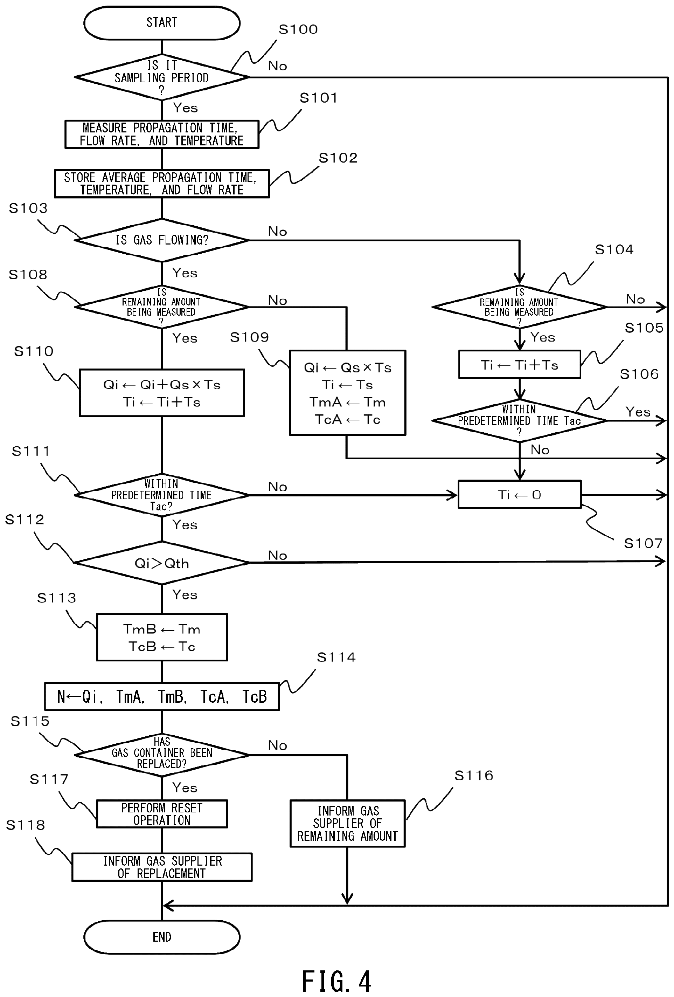

Next, the operations of the above-described remaining gas amount calculator 115 will be described using the flowchart shown in FIG. 4.

First, the controller 119 determines whether or not it is the sampling period (S100). When it is the sampling period (Yes in Step S100), the controller 119 measures the upstream propagation time Tup and the downstream propagation time Tdw by the propagation time measurer 111, measures the flow rate Qs by the flow rate calculator 112, and measures the temperature Tc by the temperature detector 113 (S101). Then, the controller 119 obtains the average propagation time Tm and stores it in a time series together with the temperature Tc and the flow rate Qs (S102). When it is determined that it is not the sampling period (No in Step S100), the controller 119 exits the process.

Next, the controller 119 determines whether or not the gas is flowing (S103). Then, based on whether or not a remaining gas amount calculation counter timer Ti is at an initial value (=0), the controller 119 determines whether or not the remaining gas amount is being measured (S104 and S108).

When the gas is not flowing (No in Step S103), and the remaining gas amount calculation counter timer Ti is at the initial value (No in Step S104), the controller 119 exits the process. When the gas is not flowing (No in Step S103), and the remaining gas amount calculation counter timer Ti is not at the initial value (Yes in Step S104), the controller 119 adds the sampling period Ts to the remaining gas amount calculation counter timer Ti (S105) and then determines whether or not the remaining gas amount calculation counter timer Ti is within the predetermined time period Tac (S106). When the remaining gas amount calculation counter timer Ti is within the predetermined time period Tac (Yes in Step S106), the controller 119 exits the process. When the remaining gas amount calculation counter timer Ti has exceeded the predetermined time period Tac (No in Step S106), the controller 119 initializes the remaining gas amount calculation counter timer Ti (Ti=0) and exits the process.

When the gas is flowing (Yes in Step S103), and the remaining gas amount calculation counter timer Ti is at the initial value (No in Step S108), the controller 119 initializes the gas consumption amount Qi to the product of the flow rate Qs and the sampling period Ts and initializes the remaining gas amount calculation counter timer Ti to the sampling period Ts. Moreover, the controller 119 substitutes the average propagation time Tm for the before-consumption average propagation time TmA and substitutes the temperature Tc for the before-consumption temperature TcA (S109). Then, the controller 119 exits the process.

On the other hand, when the gas is flowing (Yes in Step S103), and the remaining gas amount calculation counter timer Ti is not at the initial value (Yes in Step S108), the controller 119 adds the product of the flow rate Qs and the sampling period Ts to the gas consumption amount Qi, adds the sampling period Ts to the remaining gas amount calculation counter timer Ti (S110), and determines whether or not the remaining gas amount calculation counter timer Ti is within the predetermined time period Tac (S111). When the remaining gas amount calculation counter timer Ti has exceeded the predetermined time period Tac (No in Step S111), the controller 119 initializes the remaining gas amount calculation counter timer Ti (Ti=0) and exits the process. When the remaining gas amount calculation counter timer Ti is within the predetermined time period Tac (Yes in Step S111), the controller 119 determines whether or not the gas consumption amount Qi has exceeded the predetermined integrated flow amount Qth

(S112). When the gas consumption amount Qi has not exceeded the predetermined integrated flow amount Qth (No in Step S112), the controller 119 exits the process. When the gas consumption amount Qi has exceeded the predetermined integrated flow amount Qth (Yes in Step S112), the controller 119 substitutes the average propagation time Tm for the after-consumption average propagation time TmB and substitutes the temperature Tc for the after-consumption temperature TcB (S113).

Then, the remaining gas amount calculator 115 calculates the remaining gas amount N from the gas consumption amount Qi, the before-consumption average propagation time TmA, the before-consumption temperature TcA, the after-consumption average propagation time TmB, and the after-consumption temperature TcB (S114). Based on whether or not the remaining gas amount N is larger than a previous remaining gas amount Np by a predetermined value $\Delta N$ or more, the gas container replacement detector 117 determines whether or not the gas container 2 needs to be replaced (S115).

When the gas container 2 has not been replaced (No in Step S115), the controller 119 notifies the remaining gas amount to, for example, the center device 7 by the external communicator 118, thereby informing the gas supplier (S116). On the other hand, when the gas container 2 has been replaced (Yes in Step S115), the controller 119 resets the integrated value of the integrated remaining gas amount monitor 116 (S117) and notifies gas replacement detection or the remaining gas amount to, for example, the center device 7 by the external communicator 118, thereby informing the gas supplier (S118).

Step S117 (resetting the integrated value of the integrated remaining gas amount monitor 116) and Steps S116 and S118 (notifying the remaining gas amount and the replacement to, for example, the center device 7) may be able to be suitably selected depending on an installation status.

**1-3. Effects, etc.**

As described above, according to the gas meter 1 of the present embodiment, the remaining gas amount calculator 115 calculates the remaining gas amount in the gas container 2 based on the propagation time measured by the propagation time measurer 111 and the temperature measured by the temperature detector 113 at a predetermined time point, the propagation time measured by the propagation time measurer 111 and the temperature measured by the temperature detector 113 after a predetermined time period has elapsed since the predetermined time point, and the flow rate measured by the flow rate calculator 112 in a period from the predetermined time point until the predetermined time period elapses. Thus, the accurate remaining gas amount can be obtained without requiring the flow rate integrated value counted from the time of the replacement of the gas container 2.

Hereinafter, the calculation of the remaining gas amount will be described in more detail. As described above, the composition of the gas can be obtained from the propagation time and the temperature. If the composition of the gas (the concentration of butane in the gas) discharged from the gas container 2 is known, the composition of the liquid phase (the concentration of butane in the liquid) in the gas container 2 can be obtained based on the gas-liquid equilibrium relationship (gas-liquid equilibrium phase diagram) corresponding to the type of gas. However, there is such a problem that it is difficult to uniquely determine the ratio between the amount of substance in the gas phase and the amount of substance in the liquid phase in the entire gas container 2. Therefore, when only the composition of the gas phase and the composition of the liquid phase are known, the concentration of butane in the entire gas container 2 is not determined. As a result, it is unclear whether the gas container 2 contains mostly liquid or mostly gas. Generally, the remaining amount in the gas container 2 is large when the gas container 2 contains mostly liquid.

As one example, the following will consider a case where the gas is consumed in a low-temperature environment. Since the pressure in the gas container 2 decreases at low temperature, the gas whose concentration of butane is high is consumed. In this case, the concentration of butane in the entire gas container 2 becomes lower than that in the gas container 2 that has been continuously used at high temperature. Therefore, the amount of substance of the liquid in the gas container 2 decreases. Since the remaining gas amount in the gas container 2 may change depending on the history of temperature changes, the accurate remaining gas amount cannot be obtained by measuring only the concentration of butane in the gas after the temperature has returned to normal.

Here, the remaining gas amount is obtained based on findings in which the degree of change in the composition of the gas in the gas container 2 when a predetermined integrated flow amount of gas has flowed out from the gas container 2 depends on the ratio between the amount of substance in the gas phase and the amount of substance in the liquid phase in the gas container 2 at that time. Specifically, in the gas meter 1, the remaining gas amount is obtained using the concentration of butane measured at a predetermined time point, the integrated flow amount of gas measured after a predetermined time period has elapsed since the predetermined time point, and the concentration of butane at that time. For example, in a gas-liquid mixture state of propane and butane, when the proportion of the liquid in the gas container 2 is high, the change in the composition of the gas before and after the consumption of a predetermined amount of gas is small (the concentration of butane hardly changes). On the other hand, when the proportion of the liquid in the gas container 2 is low, the change in the composition of the gas before and after the consumption of the gas becomes large (the concentration of butane becomes high). As above, the ratio between the amount of substance in the gas phase and the amount of substance in the liquid phase in the gas container 2 can be obtained from the flow amount of gas that has flowed out in a predetermined time period and the composition of the gas before and after the flow-out. Thus, the total amount of substance in the gas container 2, i.e., the remaining gas amount can be obtained. The following will describe the details.

First, a volume (i.e., capacity) V0 of the gas container 2 is represented by the sum of a volume VL of the liquid phase and a volume VG of the gas phase in the gas container 2. Moreover, when the pressure, the temperature, the total amount of substance in the gas phase in the gas container 2 are known, the volume VG of the gas phase in the gas container 2 can be calculated using the ideal gas law ($PV=nRT$). Therefore, when calculating the remaining gas amount, the remaining gas amount calculator 115 obtains the volume VG of the gas phase in the gas container 2 using the ideal gas law.

Since molecular structures of propane and butane are similar to each other, the volume VL of the liquid phase in the gas container 2 can be obtained by the sum of the volumes of liquefied butane and liquefied propane. The volume of liquefied butane can be obtained from the total amount of substance in the liquid phase, the molar fraction of butane in the liquid phase, the average molecular weight of butane, and the density of liquefied butane. The volume of liquefied propane can be obtained from the total amount of substance in the liquid phase, the molar fraction of propane in the liquid phase, the average molecular weight of propane, and the density of liquefied propane.

Here, the ratio between the total amount of substance in the gas phase and the total amount of substance in the liquid phase is determined by the Raoult's law using three parameters that are the concentration of butane in the gas phase, the concentration of butane in the liquid phase, and the concentration of butane in the entire gas container 2. To be specific, the total amount of substance in the gas phase and the total amount of substance in the liquid phase can be obtained using the total amount of substance in the gas container 2 and the above three parameters. Therefore, when calculating the remaining gas amount, the remaining gas amount calculator 115 uses the Raoult's law for two components of the gas (mixture of two liquids) to obtain the total amount of substance in the gas phase and the total amount of substance in the liquid phase.

Moreover, the pressure in the gas container 2 and the concentration of butane in the liquid phase can be represented by the vapor pressure of butane, the vapor pressure of propane, and the concentration of butane in the gas phase using the Raoult's law.

The concentration of butane in the gas phase can be obtained by a known means in the gas meter 1. Moreover, in normal use, the temperature in the gas container 2 is correlated to a gas temperature detected by the temperature detector 113 of the gas meter 1. Regarding this point, even if there is a difference between the temperature in the gas container 2 and the temperature measured by the temperature detector 113 of the gas meter 1, such a difference can be regarded as being constant when measurements are performed at relatively short time intervals, and the difference is canceled out in the calculations described later. Therefore, the temperature in the gas container 2 and the temperature measured by the temperature detector 113 can be treated as being substantially equal to each other. Thus, when calculating the remaining gas amount, the remaining gas amount calculator 115 uses the temperature detected by the temperature detector 113 of the gas meter 1, as the temperature in the gas container 2. Moreover, a value obtained by multiplying the total amount of substance by the concentration of butane in the entire gas container 2 is the amount of butane in the entire gas container 2.

According to the above, the volume VG of the gas phase can be obtained based on: a gas meter temperature (temperature detected by the temperature detector 113) and a gas phase concentration which are measured values; the vapor pressure of butane and the vapor pressure of propane which are known parameters; and the amount of butane and the total amount of substance in the entire gas container 2 which are unknown parameters. Moreover, the volume VL of the liquid phase can be obtained based on: the gas meter temperature and the gas phase concentration which are measured values; the vapor pressure of butane, the vapor pressure of propane, the average molecular weight of butane, the average molecular weight of propane, the density of butane, and the density of propane which are known parameters; and the amount of butane and the total amount of substance in the entire gas container 2 which are unknown parameters. The sum of the volume VG of the gas phase and the volume VL of the liquid phase is the volume V0 of the gas container 2 and is constant.

When the gas has flowed at a predetermined instantaneous flow rate Qon or more for a predetermined time period Ton or more as shown in FIG. 3B, the remaining gas amount calculator 115 sets up a condition equation in which the volume V0 of the gas container 2 is equal to the sum of the volume VL of the liquid phase and the volume VG of the gas phase in the gas container 2, i.e., a condition equation in which the volume V0 based on the composition of the gas in the gas container 2 is constant. As this time, specifically, the remaining gas amount calculator 115 sets up Equation 1 below. In the above case, taking into account that the concentration of butane and the temperature may practically differ between the gas meter 1 and the gas container 2 when no gas is flowing, Equation 1 is set up only when the gas is flowing. In Equation 1, $N_A$ denotes the total amount of butane in the entire gas container 2, N denotes the total amount of substance in the entire gas container 2, and A and B denote coefficients determined based on measured values and known parameters.

**Equation 1**

$$AN_A + BN = V_0$$

After that, the remaining gas amount calculator 115 calculates the total integrated flow amount of gas and the integrated flow amount of butane which is obtained by integrating the instantaneous flow rate of butane calculated as the product of the instantaneous flow rate and the concentration of butane in the gas phase. The integrated flow amount of butane is obtained by integrating the product of the instantaneous flow rate and the concentration of butane in the gas phase.

The remaining gas amount calculator 115 sets up Equation 2 below when the gas continuously flows at a predetermined instantaneous flow rate Qmin or more, the total integrated flow amount has exceeded the predetermined value Qth, the amount of change in the temperature measured by the temperature detector 113 is a predetermined value Tth or less, and the temperature in the gas container 2 (in the present embodiment, the temperature detected by the temperature detector 113) is within a predetermined value relative to the same temperature at the time when Equation 1 is set up. However, when the instantaneous flow rate falls below a predetermined value before the total integrated flow amount exceeds the predetermined value Qth, the remaining gas amount calculator 115 determines that continuous measurement has not been achieved, and resets the integration calculation. In Equation 2, N denotes the total amount of substance in the entire gas container 2 when Equation 1 is set up, $N_A$ denotes the total amount of butane in the gas container 2 when Equation 1 is set up, Q denotes the total integrated flow amount after a predetermined time period has elapsed since Equation 1 is set up, $Q_A$ denotes the integrated flow amount of butane after a predetermined time period has elapsed since Equation 1 is set up, and A' and B' are coefficients determined based on measured values and known

parameters.

**Equation 2**

$$A'\left(N_A - \frac{Q_A}{22.4}\right) + B'\left(N - \frac{Q}{22.4}\right) = V_0$$

When setting up Equation 2, the same problem as when setting up Equation 1 occurs when the instantaneous flow rate becomes zero immediately before the total integrated flow amount exceeds the predetermined value, and when, after some time has elapsed, the total integrated flow amount has exceeded the predetermined value by only a slight flow rate. Therefore, by using the flow rate as a trigger condition for detecting the remaining gas amount, stable remaining gas amount detection can be achieved. Moreover, a plurality of predetermined values for the total integrated flow amount may be set, and setting up the equations at the beginning and end of the period during which the gas flows at the predetermined instantaneous flow rate and then calculating the remaining gas amount in the gas container 2 is advantageous in terms of measurement resolution.

The remaining gas amount calculator 115 can uniquely determine the total amount of butane $N_A$ in the entire gas container 2 and the total amount of substance N in the entire gas container 2 at the time of the set-up of Equation 1 which are unknown parameters, by solving the simultaneous equations of Equations 1 and 2. Moreover, the total amount of butane $N'_A$ in the entire gas container 2 at the time of the set-up of Equation 2 can be obtained by subtracting from the total amount of butane $N_A$ the amount of butane corresponding to the integrated flow amount of butane after a predetermined time period has elapsed, and the total amount of substance N' in the entire gas container 2 at the time of the set-up of Equation 2 can be obtained by subtracting from the total amount of substance N the amount of substance corresponding to the total integrated flow amount after the predetermined time period has elapsed. Therefore, the remaining gas amount can be obtained.

In the present embodiment, the propagation times of ultrasound and the temperatures are used to detect the composition of the gas. However, the composition of the gas can be detected by other methods, such as a method utilizing the correlation between the composition of the gas and the absorption rate of light waves.

Moreover, in the present embodiment, the flow rate calculation by the ultrasound propagation time method is used as a flow rate measuring means. However, other methods, such as a differential-pressure flow meter and a thermal flow meter, may also be used.

Moreover, in the present embodiment, the propagation time between the first ultrasonic sensor 102 at the upstream side and the second ultrasonic sensor 103 at the downstream side is used. However, the flow rate calculator 112 may perform flow rate measurement by methods other than the ultrasound method. The propagation time of ultrasound in the gas which is measured by transmitting the ultrasound and receiving its reflected wave with a single ultrasonic sensor may be used.

In the present embodiment, the gas container replacement detector 117 that detects the replacement of the gas container 2 when the remaining gas amount has increased by a predetermined value is provided, and the integrated value of the integrated remaining gas amount monitor 116 is reset when the gas container replacement detector 117 detects the replacement of the gas container 2. Thus, it is unnecessary to manually reset the integrated value, and the remaining amount management of the gas container 2 by the integrated remaining gas amount monitor 116 can be surely performed.

Moreover, in the present embodiment, the external communicator 118 that communicates with the center device 7 is provided, and when the remaining gas amount calculator 115 calculates the remaining gas amount, the external communicator 118 informs the center device 7 of the remaining gas amount. Thus, the gas supplier can use the remaining gas amount as a reference for determining priorities and the like when scheduling the delivery of the gas container 2 and the like. Furthermore, it is no longer necessary to replace the gas container 2 based on estimates while the gas still remains before the replacement of the gas container 2, and this improves delivery efficiency.

Moreover, even when the gas supplier confirms whether or not the operator has reset the integrated value of the integrated remaining gas amount monitor 116 after the replacement of the gas container 2 (the operation of the switching valve 3 or the replacement work), the operator may still forget to perform the reset. In such a case, by causing the center device 7 to issue a reset instruction to the gas meter 1, the misdetection of the integrated remaining gas amount monitor 116 can be prevented.

It should be noted that since the above-described embodiments are provided to illustrate the technology of the present disclosure, various modifications, substitutions, additions, and omissions may be made within the scope of the claims or their equivalents.

**Embodiment 2**

Hereinafter, Embodiment 2 will be described with reference to FIGS. 1A, 1B, and 5 to 7.

**3-1. Configurations**

FIGS. 1A and 1B are diagrams showing the installation state of the gas meter according to Embodiment 2 of the present disclosure, and their configurations are the same as those described in Embodiment 1.

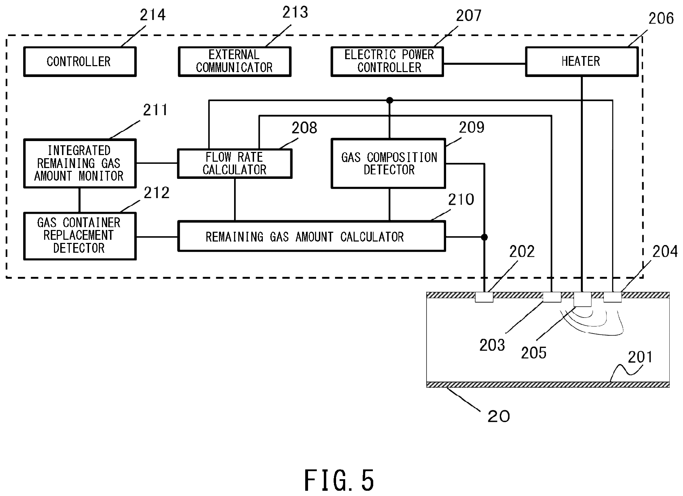

FIG. 5 is a block diagram showing the configuration of a gas meter 20 according to Embodiment 3. As shown in FIG. 5, the gas meter 20 includes: a measurement passage 201 through which the fluid to be measured flows; and a first temperature sensor 202, a second temperature sensor 203, and a third temperature sensor 204 which are located in this order from the upstream side to the downstream side in the measurement passage 201. Moreover, the gas meter 20 includes: a heated body 205 located between the second temperature sensor 203 and the third temperature sensor 204; a heater 206 that heats the heated body 205; and an electric power controller 207 that controls electric power to be supplied to the heater 206. Furthermore, the gas meter 20 includes a flow rate calculator 208 that calculates the flow rate based on an upstream after-heating temperature that is the temperature of the gas heated by the heated body 205 and detected by the second temperature sensor 203 and a downstream after-heating temperature that is the temperature of the gas heated by the heated body 205 and detected by the third temperature sensor 204. Moreover, the gas meter 20 includes a gas composition detector 209 that obtains the composition of the gas based on a before-heating temperature that is the temperature of the gas not heated by the heated body 205 and is detected by the first temperature sensor 202 and the downstream after-heating temperature detected by the third temperature sensor 204. Furthermore, the gas meter 20 includes a remaining gas amount calculator 210 that calculates the remaining gas amount in the gas container 2 based on the composition of the gas obtained by the gas composition detector 209, the before-heating temperature detected by the first temperature sensor 202, and the flow rate obtained by the flow rate calculator 208.

Moreover, the gas meter 20 includes: an integrated remaining gas amount monitor 211 that monitors the remaining gas amount in the gas container 2 by integrating the flow rate obtained by the flow rate calculator 208; and a gas container replacement detector 212 that detects the replacement of the gas container 2 based on the remaining gas amount calculated by the remaining gas amount calculator 210. Furthermore, the gas meter 20 includes: an external communicator 213 that communicates with an external device, such as the center device 7 operated by the gas supplier or the like; and a controller 214 that performs entire control and is constituted by, for example, a microcomputer.

**3-2. Operations**

Next, the operations of the remaining gas amount calculator 210 according to the present embodiment will be described.

**3-2-1. Operations When Remaining Gas Amount is Measured**

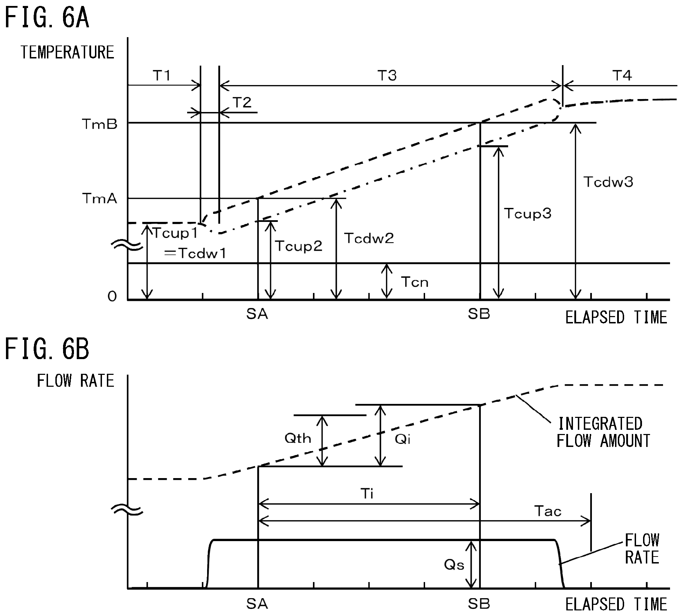

FIG. 6A is a diagram showing a change in the downstream after-heating temperature before, while, and after the gas in the gas container 2 is consumed by using the gas equipment 4 or the like. FIG. 6B is a diagram showing changes in the flow rate and the integrated flow amount.

In FIG. 6A, "Tcup" shown by a dotted line represents a change in a temperature (hereinafter referred to as an "upstream after-heating temperature Tcup") that is the temperature of the gas heated by the heated body 205 and is detected by the second temperature sensor 203. Moreover, in FIG. 6A, "Tcdw" shown by a one-dot chain line represents a change in a temperature (hereinafter referred to as a "downstream after-heating temperature Tcdw") that is the temperature of the gas heated by the heated body 205 and is detected by the third temperature sensor 204. Furthermore, in FIG. 6A, "Ten" shown by a solid line represents a temperature (hereinafter referred to as a "before-heating temperature Tcn") detected by the first temperature sensor 202.

Moreover, in FIG. 6A, the period T1 is a period in which the gas is not flowing and is not consumed, and the period T2 is a period in which the gas starts flowing, and the gas remaining in the upstream pipe 5 is passing through the gas meter 20. Furthermore, in FIG. 6A, the period T3 is a period in which the gas is flowing and is being consumed, and the period T4 is a period in which the consumption of the gas is completed.

In FIG. 6A, regarding a relationship between an upstream after-heating temperature Tcup2 and a downstream after-heating temperature Tcdw2 at the timing SA during the gas consumption and a relationship between an upstream after-heating temperature Tcup3 and a downstream after-heating temperature Tcdw3 at the timing SB during the gas consumption with respect to a relationship between an upstream after-heating temperature Tcup1 and a downstream after-heating temperature Tcdw1 before starting the gas consumption, the upstream after-heating temperature is lower than the downstream after-heating temperature at each timing. This is due to the dependence on the flow rate of the gas.

Therefore, the flow rate calculator 208 can obtain the flow rate Qs by obtaining an uncorrected flow rate of the gas from the temperature difference between the upstream after-heating temperature Tcup and the downstream after-heating temperature Tcdw and multiplying the uncorrected flow rate by a conversion factor and a flow rate coefficient.

Moreover, as is clear from FIG. 6A, the downstream after-heating temperature increases during the gas consumption. This is due to a change in heat conductivity based on the composition of the gas filled in the gas container 2. When the remaining gas amount in the gas container 2 decreases, the composition of the gas changes, and the proportion of butane increases, and therefore, the proportion of butane, whose heat conductivity is lower than that of propylene and propane, increases. Thus, the temperature of the gas heated by the heated body 205 is less likely to dissipate into surroundings. As a result, the after-heating temperatures detected by the second temperature sensor 203 and the third temperature sensor 204 increase. These correlations are based on known equations, and the composition of the gas can be detected from the after-heating temperature and the before-heating temperature at the upstream side or the downstream side.

Therefore, the remaining gas amount calculator 210 monitors the downstream after-heating temperature Tcdw, the before-heating temperature Tcn, and the flow rate Qs. When the gas consumption amount Qi in the predetermined time period Tac changes to the predetermined integrated flow amount Qth or more, the remaining gas amount calculator 210 performs calculation of measuring the remaining gas amount. The remaining gas amount calculator 210 can calculate the remaining gas amount N in the gas container 2 based on the gas consumption amount Qi, a before-consumption after-heating temperature Tm1A, a before-consumption before-heating temperature Tc1A, an after-consumption after-heating temperature Tm1B, and an after-consumption before-heating temperature Tc1B.

It should be noted that the composition of the gas may be detected by using the upstream after-heating temperature Tcup instead of the downstream after-heating temperature Tcdw. Moreover, the predetermined time period Tac and the predetermined integrated flow amount Qth can be suitably set based on the composition of the LP gas filled in the gas container 2.

## 3-2-2. Explanation of a Series of Operations Using a Flowchart

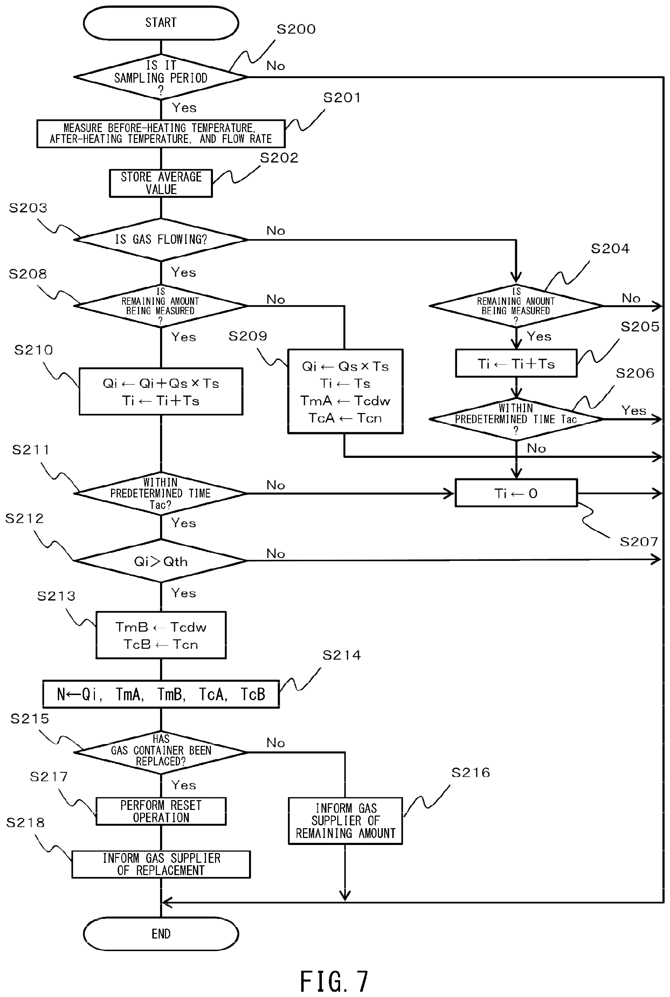

Next, the operations of the above-described remaining gas amount calculator 210 will be described using the flowchart shown in FIG. 7.

First, the controller 214 determines whether or not it is the sampling period (S200). When it is the sampling period (Yes in Step S200), the controller 214 measures the before-heating temperature Tcn by the first temperature sensor 202, measures the upstream after-heating temperature Tcup by the second temperature sensor 203, measures the downstream after-heating temperature Tcdw by the third temperature sensor 204, measures the flow rate Qs by the flow rate calculator 208 (S201), and stores the information in a time series (S202). On the other hand, when it is not the sampling period (No in Step S200), the controller 214 exits the process.

Next, the controller 214 determines whether or not the gas is flowing (S203). Then, based on whether or not the remaining gas amount calculation counter timer Ti is at the initial value (=0), the controller 214 determines whether or not the remaining gas amount is being measured (S204 and S208).

When the gas is not flowing (No in Step S203), and the remaining gas amount calculation counter timer Ti is at the initial value (No in Step S204), the controller 214 exits the process. When the gas is not flowing (No in Step S203), and the remaining gas amount calculation counter timer Ti is not at the initial value (Yes in Step S204), the controller 214 adds the sampling period Ts to the remaining gas amount calculation counter timer Ti (S205) and then determines whether or not the remaining gas amount calculation counter timer Ti is within the predetermined time period Tac (S206). When the remaining gas amount calculation counter timer Ti is within the predetermined time period Tac (Yes in Step S206), the controller 214 exits the process. When the remaining gas amount calculation counter timer Ti has exceeded the predetermined time period Tac (No in Step S206), the controller 214 initializes the remaining gas amount calculation counter timer Ti (Ti=0) and exits the process.

When the gas is flowing (Yes in Step S203), and the remaining gas amount calculation counter timer Ti is at the initial value (No in Step S208), the controller 214 initializes the gas consumption amount Qi to the product of the flow rate Qs and the sampling period Ts and initializes the remaining gas amount calculation counter timer Ti to the sampling period Ts. Moreover, the controller 214 substitutes the downstream after-heating temperature Tcdw for the before-consumption after-heating temperature Tm1A and substitutes the before-heating temperature Tcn for the before-consumption before-heating temperature Tc1A (S209). Then, the controller 214 exits the process.

On the other hand, when the gas is flowing (Yes in Step S203), and the remaining gas amount calculation counter timer Ti is not at the initial value (Yes in Step S208), the controller 214 adds the product of the flow rate Qs and the sampling period Ts to the gas consumption amount Qi, adds the sampling period Ts to the remaining gas amount calculation counter timer Ti (S210), and determines whether or not the remaining gas amount calculation counter timer Ti is within the predetermined time period Tac (S211). When the remaining gas amount calculation counter timer Ti has exceeded the predetermined time period Tac (No in Step S211), the controller 214 initializes the remaining gas amount calculation counter timer Ti (Ti=0) and exits the process. When the remaining gas amount calculation counter timer Ti is within the predetermined time period Tac (Yes in Step S211), the controller 214 determines whether or not the gas consumption amount Qi has exceeded the predetermined integrated flow amount Qth (S212). When the gas consumption amount Qi has not exceeded the predetermined integrated flow amount Qth (No in Step S212), the controller 214 exits the process. When the gas consumption amount Qi has exceeded the predetermined integrated flow amount Qth (Yes in Step S212), the controller 214 substitutes the downstream after-heating temperature Tcdw for the after-consumption after-heating temperature Tm1B and substitutes the before-heating temperature Tcn for the after-consumption temperature TcB (S213).

Then, the remaining gas amount calculator 210 calculates the remaining gas amount N from the gas consumption amount Qi, the before-consumption after-heating temperature Tm1A, the before-consumption before-heating temperature Tc1A, the after-consumption after-heating temperature Tm1B, and the after-consumption before-heating temperature Tc1B (S214). Based on whether or not the remaining gas amount N is larger than the previous remaining gas amount Np by the predetermined value $\Delta N$ or more, the gas container replacement detector 212 determines whether or not the gas container 2 needs to be replaced (S215).

When the gas container 2 is not replaced (No in Step S215), the controller 214 notifies the remaining gas amount to, for example, the center device 7 by the external communicator 213, thereby informing the gas supplier (S216). On the other hand, when the gas container 2 is replaced (Yes in Step S215), the controller 214 resets the integrated value of the integrated remaining gas amount monitor 211 (S217) and notifies the gas replacement detection or the remaining gas amount to, for example, the center device 7 by the external communicator 213, thereby informing the gas supplier (S218).

Step S217 (resetting the integrated value of the integrated remaining gas amount monitor 211) and Steps S216 and S218 (notifying the remaining gas amount and the replacement to, for example, the center device 7) may be able to be suitably selected depending on the installation status.

### 3-3. Effects, etc.

As above, according to the gas meter 20 of the present embodiment, the flow rate calculator 208 calculates the flow rate based on the upstream after-heating temperature that is the temperature of the gas heated by the heated body 205 and is detected by the second temperature sensor 203 and the downstream after-heating temperature that is the temperature of the gas heated by the heated body 205 and is detected by the third temperature sensor 204. Then, the remaining gas amount calculator 210 calculates the remaining gas amount in the gas container 2 based on the before-heating temperature that is the temperature of the gas not heated by the heated body 205 and is detected by the first temperature sensor 202, the downstream after-heating temperature detected by the third temperature sensor 204, and the flow rate obtained by the flow rate calculator 208. Thus, the accurate remaining gas amount can be obtained without requiring the flow rate integrated value counted from the time of the replacement of the gas container 2.

In the present embodiment, the method utilizing the correlation between the composition of the gas and the heat conductivity is used. However, the composition of the gas can be detected also by other methods, such as a method utilizing the correlation between the composition of the gas and the absorption rate of light waves. Moreover, in the present embodiment, the flow rate calculation utilizing the temperature difference between the upstream side and the downstream side during the heating of the heated body is used as the flow rate measuring means. However, other methods, such as an ultrasonic flow meter and a differential-pressure flow meter, may be used. It should be noted that the other effects are the same as those in Embodiment 1.

In the above embodiments, each of the first ultrasonic sensor 102 and the second ultrasonic sensor 103 corresponds to an ultrasonic sensor, the transmitter 105 corresponds to a transmitting means, the propagation time measurer 111 corresponds to a propagation time measuring means, each of the flow rate calculators 112 and 208 corresponds to a flow rate measuring means, the temperature detector 113 corresponds to a temperature detecting means, and each of the external communicators 118 and 213 corresponds to an external communicating means. Moreover, in the above embodiments, each of the gas composition detectors 114 and 209 corresponds to a composition detecting means, each of the remaining gas amount calculators 115 and 210 corresponds to a remaining gas amount calculating means, the third temperature sensor 204 corresponds to an after-heating gas temperature detecting means, and the heater 206 corresponds to a heating means.

It should be noted that the above-described embodiments are provided merely to illustrate the technology of the present disclosure, and therefore, various modifications, substitutions, additions, omissions, and the like may be made within the scope of the claims or their equivalents.

### Industrial Applicability

As above, the gas meter according to the present disclosure can accurately detect the remaining gas amount in the gas container, and is therefore effective in improving the efficiency of operations, such as replacing and collecting the gas container.

**Reference Signs List**

| | |
|---|---|
| 1, 20 | gas meter |
| 2 | gas container |
| 7 | center device |
| 101 | measurement passage |
| 102 | first ultrasonic sensor |
| 103 | second ultrasonic sensor |
| 105 | transmitter |
| 111 | propagation time measurer |
| 112, 208 | flow rate calculator |
| 113 | temperature detector |
| 114 | gas composition detector |
| 115, 210 | remaining gas amount calculator |
| 116, 211 | integrated remaining gas amount monitor |
| 117, 212 | gas container replacement detector |
| 118, 213 | external communicator |
| 119, 214 | controller |
| 201 | measurement passage |
| 202 | first temperature sensor |
| 203 | second temperature sensor |
| 204 | third temperature sensor |
| 205 | heated body |
| 206 | heater |
| 207 | electric power controller |
| 209 | gas composition detector |
| Qmin | predetermined instantaneous flow rate |
| Qon | predetermined instantaneous flow rate |
| Qth | predetermined value |
| Ton | predetermined time period |
| Tth | predetermined value |

**Claims**

1. A gas meter connected downstream of a gas container,
   the gas meter comprising:

   a measurement passage through which gas flows;
   a flow rate measuring means for measuring a flow rate of the gas;
   a composition detecting means for detecting a composition of the gas;
   a temperature detecting means for detecting a temperature of the gas; and
   a remaining gas amount calculating means for calculating a remaining gas amount in the gas container based on the composition measured by the composition detecting means and the temperature detected by the temperature detecting means at a predetermined time point, the composition measured by the composition detecting means and the temperature detected by the temperature detecting means after a predetermined time period has elapsed since the predetermined time point, and the flow rate measured by the flow rate measuring means in a period from the predetermined time point until the predetermined time period elapses.

2. The gas meter according to claim 1, comprising:

   at least one ultrasonic sensor located in the measurement passage;
   a transmitting means for driving the ultrasonic sensor to transmit an ultrasonic signal into the gas; and
   a propagation time measuring means for measuring a propagation time during which the ultrasonic signal propagates through the gas, based on the ultrasonic signal received by the ultrasonic sensor, wherein

the composition detecting means detects the composition of the gas based on the propagation time measured by the propagation time measuring means and the temperature detected by the temperature detecting means.

3. The gas meter according to claim 1, comprising:

a heated body located in the measurement passage;
a heating means for heating the heated body; and
an after-heating gas temperature detecting means for detecting the temperature of the gas heated by the heating means, wherein
the composition detecting means detects the composition of the gas based on the temperature detected by the after-heating gas temperature detecting means.

4. The gas meter according to claim 1, comprising an external communicating means for communicating with a center device, wherein
when the remaining gas amount is calculated by the remaining gas amount calculating means, the external communicating means informs the center device of the remaining gas amount.

5. The gas meter according to claim 1, wherein the remaining gas amount calculating means uses the ideal gas law when calculating the remaining gas amount.

6. The gas meter according to claim 1, wherein the remaining gas amount calculating means uses the Raoult's law for two components of the gas when calculating the remaining gas amount.

7. The gas meter according to claim 1, wherein when calculating the remaining gas amount, the remaining gas amount calculating means regards the temperature detected by the temperature detecting means as a temperature in the gas container.

8. The gas meter according to claim 1, wherein:

the predetermined time point is a time point at which the gas has flowed at a predetermined instantaneous flow rate or more for a predetermined time period or more; and
a time point at which the predetermined time period has elapsed since the predetermined time point is a time point at which the gas has continuously flowed at the predetermined instantaneous flow rate or more, and a total integrated flow amount of the gas has exceeded a predetermined value.

9. The gas meter according to claim 1, wherein a time point at which the predetermined time period has elapsed since the predetermined time point is a time point at which the temperature measured by the temperature detecting means is a predetermined value or less.

FIG. 1A

FIG. 1B

FIG. 2

FIG. 3A

FIG. 3B

FIG. 3C

START — S100

IS IT SAMPLING PERIOD ? — No

Yes

MEASURE PROPAGATION TIME, FLOW RATE, AND TEMPERATURE — S101

STORE AVERAGE PROPAGATION TIME, TEMPERATURE, AND FLOW RATE — S102

S103 — IS GAS FLOWING? — No

Yes

S108 — IS REMAINING AMOUNT BEING MEASURED ? — No

S104 — IS REMAINING AMOUNT BEING MEASURED ? — No

Yes

S109 — $Qi \leftarrow Qs \times Ts$
$Ti \leftarrow Ts$
$TmA \leftarrow Tm$
$TcA \leftarrow Tc$

Yes — S105 — $Ti \leftarrow Ti + Ts$

S110 — $Qi \leftarrow Qi + Qs \times Ts$
$Ti \leftarrow Ti + Ts$

S106 — WITHIN PREDETERMINED TIME Tac ? — Yes

No

S111 — WITHIN PREDETERMINED TIME Tac? — No

$Ti \leftarrow 0$

S107

S112 — $Qi > Qth$ — No

Yes

S113 — $TmB \leftarrow Tm$
$TcB \leftarrow Tc$

S114 — $N \leftarrow Qi, TmA, TmB, TcA, TcB$

S115 — HAS GAS CONTAINER BEEN REPLACED? — No

Yes

S117 — PERFORM RESET OPERATION

S116 — INFORM GAS SUPPLIER OF REMAINING AMOUNT

S118 — INFORM GAS SUPPLIER OF REPLACEMENT

END

**FIG. 4**

FIG. 5

## FIG. 6A

## FIG. 6B

FIG. 7

## INTERNATIONAL SEARCH REPORT

| International application No. |
|---|
| **PCT/JP2024/028611** |

**A.    CLASSIFICATION OF SUBJECT MATTER**

*G01F 3/22*(2006.01)i; *G01F 1/66*(2022.01)i
FI:   G01F3/22 Z; G01F1/66 101

According to International Patent Classification (IPC) or to both national classification and IPC

**B.    FIELDS SEARCHED**

Minimum documentation searched (classification system followed by classification symbols)

G01F3/22; G01F1/66; G01F1/667; G01F1/68-1/699

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2021-139731 A (PANASONIC INTELLECTUAL PROPERTY MANAGEMENT CO., LTD.) 16 September 2021 (2021-09-16)<br>claims 1-6, paragraphs [0017]-[0084], fig. 1-7 | 1-9 |
| A | JP 2019-138325 A (TOYO KEIKI CO., LTD.) 22 August 2019 (2019-08-22)<br>paragraphs [0023]-[0043], fig. 1-4 | 1-9 |
| A | JP 2001-281031 A (TOYO KEIKI CO., LTD.) 10 October 2001 (2001-10-10)<br>paragraphs [0019]-[0023] | 1-9 |
| A | JP 2003-177037 A (YAZAKI CORPORATION) 27 June 2003 (2003-06-27)<br>paragraphs [0105]-[0137], fig. 1-11 | 1-9 |
| A | JP 11-51727 A (YAZAKI CORPORATION) 26 February 1999 (1999-02-26)<br>paragraphs [0030]-[0053], fig. 1-6 | 1-9 |
| A | JP 2006-501442 A (EMS-PATENT AG) 12 January 2006 (2006-01-12)<br>paragraphs [0022]-[0053], fig. 1-4 | 1-9 |

☐ Further documents are listed in the continuation of Box C.        ☑ See patent family annex.

| | |
|---|---|
| *     Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **03 September 2024** | **17 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/028611**

| Patent document cited in search report | | | Publication date (day/month/year) | Patent family member(s) | Publication date (day/month/year) |
|---|---|---|---|---|---|
| JP | 2021-139731 | A | 16 September 2021 | (Family: none) | |
| JP | 2019-138325 | A | 22 August 2019 | (Family: none) | |
| JP | 2001-281031 | A | 10 October 2001 | (Family: none) | |
| JP | 2003-177037 | A | 27 June 2003 | (Family: none) | |
| JP | 11-51727 | A | 26 February 1999 | (Family: none) | |
| JP | 2006-501442 | A | 12 January 2006 | US 2006/0179936 A1 paragraphs [0025]-[0040], fig. 1-4 WO 2004/018976 A2 EP 1391703 A1 KR 10-2005-0058449 A | |

Form PCT/ISA/210 (patent family annex) (July 2022)

**REFERENCES CITED IN THE DESCRIPTION**

**Patent documents cited in the description**

- JP 2001174308 A